# DEMANDE DE BREVET EUROPEEN

(11) **EP 4 831 499 A1**
(43) Date de publication de la demande: **28.10.2026**
(21) Numéro de dépôt: 26174025.2
(22) Date de dépôt: 22.04.2026
(51) Int. Cl.: F16B 19/10

(54) **FIXATION TEMPORAIRE DE STRUCTURES**

(30) Priorité: 23.04.2025 FR 2504308
(71) Demandeur: LISI Aerospace, 75012 Paris (FR)
(72) Inventeur: BRACHET, Julien, 18500 VIGNOUX SUR BARANGEON (FR)
(74) Mandataire: Lavoix

(57) **Abrégé**

L'invention concerne une fixation (10) pour l'assemblage temporaire d'au moins deux structures préalablement percées, comportant : un corps principal (14) tubulaire ; un corps de pince (16) tubulaire, mobile axialement par rapport au corps principal ; une portion avant (44) du corps de pince comprenant une pluralité d'ouvertures radiales (50) ; un écarteur (22), s'étendant dans le corps principal et dans le corps de pince ; et un élément d'actionnement (24), disposé à l'extrémité arrière du corps principal et mobile en rotation par rapport audit corps principal.

Sous l'effet d'une rotation de l'élément d'actionnement, le corps de pince et l'écarteur sont mobiles axialement l'un par rapport à l'autre.

La fixation comprend en outre une pluralité d'éléments de pince (18) et un organe élastique annulaire (20), disposés dans la portion avant (44) du corps de pince, l'organe élastique annulaire entourant les éléments de pince.

## Description

La présente invention concerne une fixation pour l'assemblage temporaire d'au moins deux structures préalablement percées, du type comportant : un corps principal tubulaire, s'étendant selon un axe entre une extrémité avant et une extrémité arrière ; un corps de pince tubulaire, mobile axialement par rapport au corps principal et comprenant une portion avant et une portion arrière, alignées selon l'axe ; la portion arrière étant bloquée en rotation dans le corps principal ; la portion avant formant une saillie par rapport à l'extrémité avant du corps principal et comprenant : une surface radiale, sensiblement cylindrique de révolution ; et une pluralité d'ouvertures radiales, disposées autour de l'axe ; un écarteur, s'étendant selon l'axe dans le corps principal et dans le corps de pince ; et un élément d'actionnement, disposé à l'extrémité arrière du corps principal et mobile en rotation par rapport audit corps principal ; la fixation étant configurée de sorte que, sous l'effet d'une rotation de l'élément d'actionnement par rapport au corps principal, le corps de pince et l'écarteur sont mobiles l'un par rapport à l'autre, entre une première et une deuxième positions axiales de l'écarteur par rapport au corps de pince.

L'invention s'applique particulièrement aux fixations temporaires de type agrafes d'épinglage.

Dans l'industrie aéronautique, avant de réaliser l'assemblage définitif de deux éléments de structure, il est connu de procéder à un assemblage provisoire desdits éléments au moyen de fixations temporaires insérées dans des trous traversants. De telles fixations temporaires sont notamment décrites dans le document EP3781825 au nom de la Demanderesse.

De manière classique, de telles fixations temporaires comportent des pinces flexibles, une extrémité de chaque pince comprenant un bec d'accrochage. Lorsqu'une fixation temporaire est retirée des éléments de structure au moyen d'un robot, il arrive que le retrait ne s'effectue pas dans une direction exactement perpendiculaire à la surface des éléments. Les becs risquent alors d'accrocher la surface arrière, ce qui bloque le retrait de la fixation temporaire

Le but de l'invention est alors de proposer une fixation telle que décrite ci-dessus, permettant de retirer la fixation temporaire sans accrocher la face arrière, même si la direction de retrait ne s'effectue pas dans une direction exactement perpendiculaire à la surface des éléments.

A cet effet, l'invention a pour objet une fixation du type précité, comprenant en outre une pluralité d'éléments de pince et un organe élastique annulaire, disposés dans la portion avant du corps de pince, l'organe élastique annulaire entourant les éléments de pince ; chaque élément de pince étant en vis-à-vis de l'une de la pluralité d'ouvertures radiales du corps de pince ; chaque élément de pince comprenant une surface d'appui, sensiblement perpendiculaire à l'axe et orientée vers la portion arrière du corps de pince ; et dans laquelle : chaque élément de pince est mobile par rapport au corps de pince, entre une position rétractée, dans laquelle l'élément de pince est entièrement contenu à l'intérieur de la surface radiale de la portion avant, et une position déployée, dans laquelle l'élément de pince est disposé dans l'ouverture radiale correspondante et la surface d'appui de l'élément de pince est en saillie radiale par rapport à la surface radiale de la portion avant ; sous l'effet d'une contrainte mécanique, l'organe élastique annulaire est étirable de manière réversible entre une première et une deuxième dimensions transversales ; et la fixation est mobile entre : une configuration rétractée, dans laquelle l'écarteur est dans la première position axiale par rapport au corps de pince, chaque élément de pince est dans la position rétractée et l'organe élastique annulaire présente la première dimension transversale ; et une configuration déployée, dans laquelle l'écarteur est dans la deuxième position axiale par rapport au corps de pince, les éléments de pince entourent l'écarteur, chaque élément de pince est dans la position déployée et l'organe élastique annulaire présente la deuxième dimension transversale.

L'organe annulaire élastique ramène les éléments de pince à l'intérieur du corps de pince dès que l'écarteur présente la position axiale correspondante. La fixation peut alors être facilement dissociée des structures.

Suivant d'autres aspects avantageux de l'invention, la fixation comporte l'une ou plusieurs des caractéristiques suivantes, prises isolément ou suivant toutes les combinaisons techniquement possibles :
- l'écarteur comporte une première et une deuxième parties, alignées selon l'axe et présentant respectivement une première et une deuxième dimensions radiales, la première dimension radiale étant inférieure à la deuxième dimension radiale ; la fixation étant configurée de sorte que, dans la configuration rétractée et dans la configuration déployée de la fixation, les éléments de pince sont disposés respectivement autour de la première partie et autour de la deuxième partie de l'écarteur ;
- chaque élément de pince comprend une surface radiale externe comportant une portion de gorge, sensiblement perpendiculaire à l'axe ; et l'organe élastique annulaire est disposé dans la portion de gorge de chacun des éléments de pince ;
- chaque élément de pince est délimité angulairement par deux flancs ; et dans la configuration rétractée, les flancs adjacents de deux éléments de pince adjacents sont au contact l'un de l'autre ;
- la fixation comprend deux éléments de pince, dans laquelle : le corps de pince comprend deux ouvertures radiales et deux languettes séparant lesdites ouvertures radiales ; chaque languette comprend un méplat interne, parallèle à l'axe ; chaque élément de pince comprend deux méplats externes, parallèles l'un à l'autre et à l'axe ; et dans la configuration déployée de la fixation, chacun des méplats externes de chaque élément de pince est au contact du méplat interne de l'une des deux languettes ;
- l'écarteur est fixe axialement par rapport au corps principal ; l'élément d'actionnement comporte une surface interne taraudée ; et la portion arrière du corps de pince comporte un filetage, apte à coopérer avec ladite surface interne taraudée, de sorte que la rotation de l'élément d'actionnement par rapport au corps principal conduise à un déplacement axial du corps de pince par rapport audit corps principal ;
- la fixation comprend en outre un élément de maintien disposé dans le corps principal et fixe par rapport audit corps principal, l'écarteur étant solidaire dudit élément de maintien ;
- la portion arrière du corps de pince et l'élément de maintien comprennent respectivement des premières et des deuxièmes surfaces planes, parallèles à l'axe ; lesdites premières et deuxièmes surfaces planes étant aptes à coulisser les unes contre les autres lors d'un déplacement axial du corps de pince par rapport au corps principal ;
- l'écarteur est solidaire de l'élément d'actionnement ; l'élément d'actionnement comporte une surface externe filetée ; et la portion arrière du corps de pince comporte un taraudage, apte à coopérer avec ladite surface externe filetée, de sorte que la rotation de l'élément d'actionnement par rapport au corps principal conduise à un déplacement axial du corps de pince par rapport audit corps principal ;
- la portion arrière du corps de pince et une surface interne du corps principal comprennent respectivement des troisièmes et des quatrièmes surfaces planes, parallèles à l'axe ; lesdites troisièmes et quatrièmes surfaces planes étant aptes à coulisser les unes contre les autres lors d'un déplacement axial du corps de pince par rapport au corps principal ;
- le corps principal comprend une paroi d'appui, destinée à venir en appui contre une première face des structures.

L'invention se rapporte en outre à un assemblage comprenant : des structures à assembler, comprenant une première et une seconde faces opposées, ainsi qu'un perçage débouchant sur chacune desdites première et seconde faces ; et une fixation telle que décrite ci-dessus, en configuration déployée, la portion avant du corps de pince étant disposée dans le perçage, la paroi d'appui du corps principal et la surface d'appui des éléments de pince étant en appui, respectivement, contre la première face et contre la seconde face des structures.

L'invention apparaîtra plus clairement à la lecture de la description qui va suivre, donnée uniquement à titre d'exemple non limitatif, et faite en référence aux dessins dans lesquels :
- la figure 1 est une vue éclatée d'une fixation selon un premier mode de réalisation de l'invention ;
- la figure 2 est une vue en coupe de la fixation de la figure 1, dans une première configuration ;
- la figure 3 est une vue en coupe d'un assemblage comprenant la fixation de la figure 1 dans une deuxième configuration ;
- la figure 4 est une vue éclatée, en coupe partielle, d'une fixation selon un deuxième mode de réalisation de l'invention ;
- la figure 5 est une vue en coupe de la fixation de la figure 4, dans une première configuration ; et
- la figure 6 est une vue en coupe d'un assemblage comprenant la fixation de la figure 2 dans une deuxième configuration.

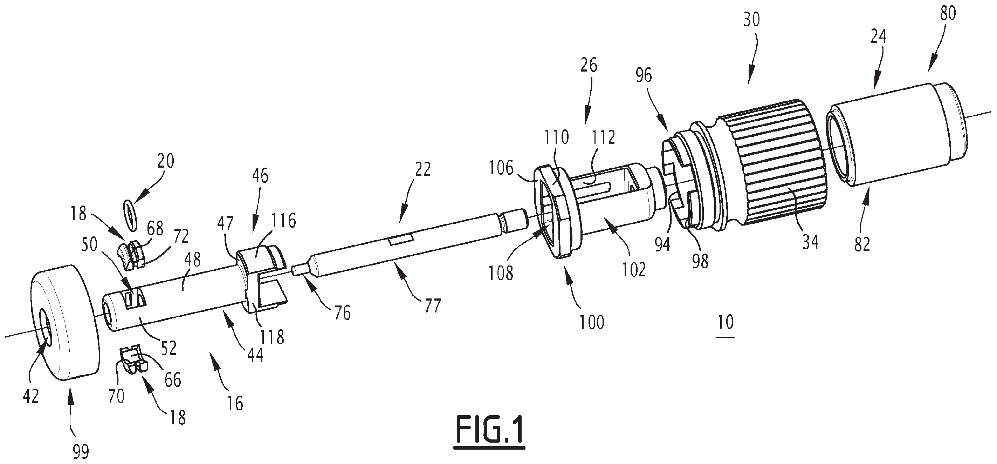

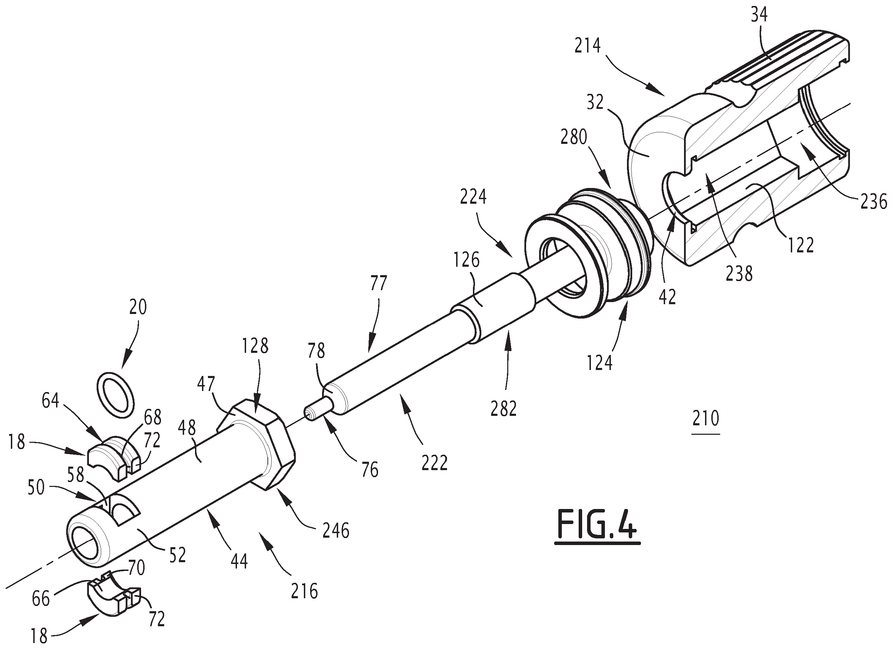

Les figures 1 à 3 montrent une fixation 10 selon un premier mode de réalisation de l'invention. Les figures 4 à 6 montrent une fixation 210 selon un deuxième mode de réalisation de l'invention.

Les fixations 10 et 210 seront décrites simultanément ci-après, les éléments communs étant désignés par les mêmes numéros de référence.

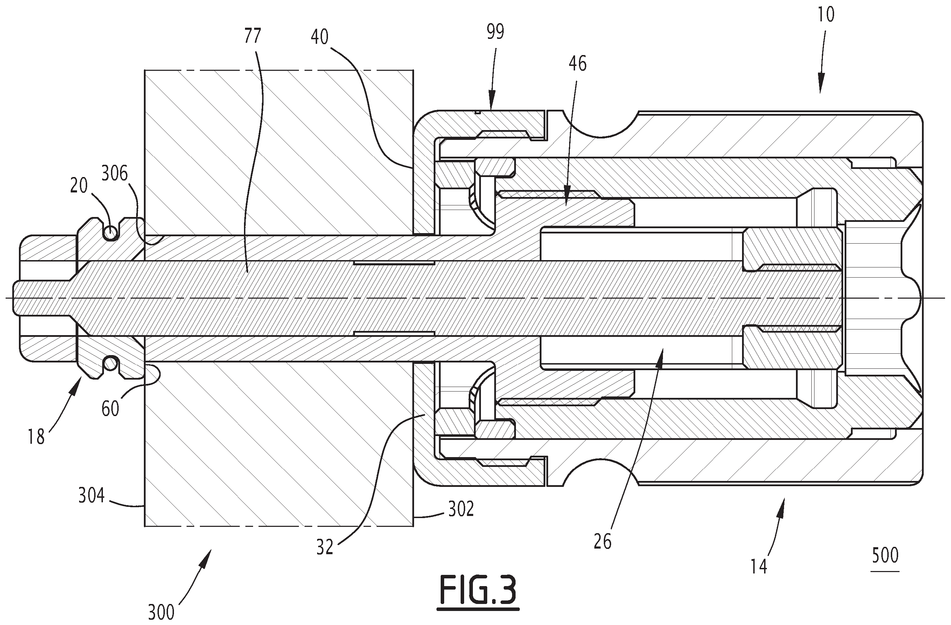

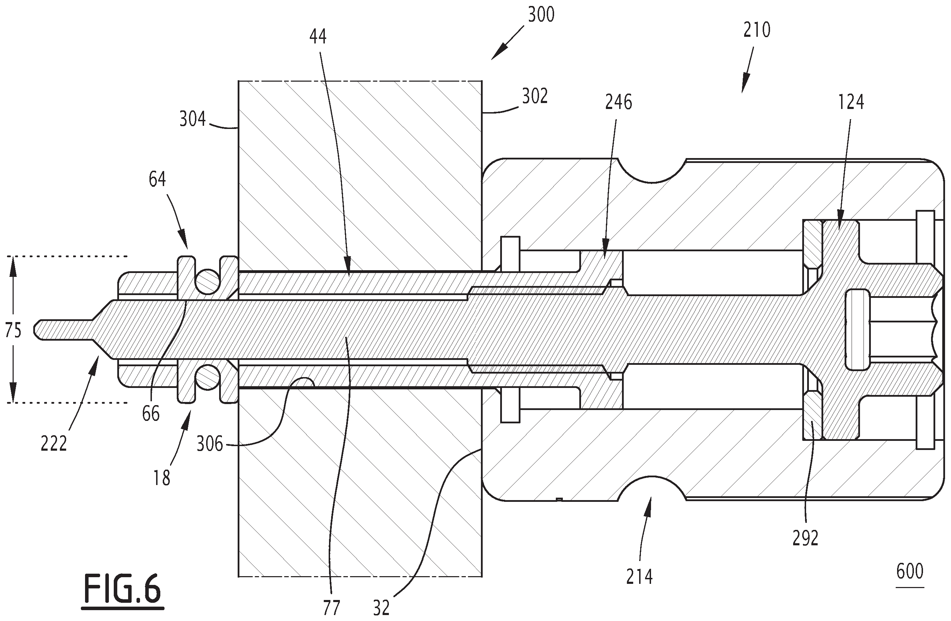

La fixation 10, 210 est apte à assembler temporairement au moins deux structures 300 préalablement percées. Plus précisément, la figure 3 montre un assemblage 500 selon un premier mode de réalisation de l'invention, comprenant la fixation 10 et les structures 300 ; et la figure 6 montre un assemblage 600 selon un deuxième mode de réalisation de l'invention, comprenant la fixation 210 et les structures 300. A des fins de simplification, les structures 300 sont représentées de manière monobloc.

La fixation 10, 210 s'étend selon un axe 12 et comprend : un corps principal 14, 214 ; un corps de pince 16, 216 ; une pluralité d'éléments de pince 18 ; un organe élastique annulaire 20 ; un écarteur 22, 222 ; et un élément d'actionnement 24, 224. Dans le premier mode de réalisation, la fixation 10 comporte en outre un élément de maintien 26.

Dans les modes de réalisation représentés, le corps principal 14, 214 est formé d'une partie tubulaire 30, 230 et d'une paroi d'appui 32. La partie tubulaire 30, 230 s'étend selon l'axe 12 entre une première et une seconde extrémités ouvertes, la paroi d'appui 32 étant disposée à la première extrémité de ladite partie tubulaire 30, 230.

Dans la suite de la description, on considère que la paroi d'appui 32 est disposée à une extrémité avant du corps principal 14, 214 selon l'axe 12 ; et que la seconde extrémité de la partie tubulaire 30, 230 forme une extrémité arrière dudit corps principal 14, 214. Plus généralement, dans la suite de la description, les termes « avant » et « arrière » s'entendent selon cette orientation par rapport à l'axe 12 de la fixation 10, 210.

La partie tubulaire 30, 230 comporte une surface externe et une surface interne, s'étendant autour de l'axe 12. Dans les modes de réalisation représentés, la surface externe de la partie tubulaire 30, 230 comporte des moyens 34 de blocage en rotation, tels que des dents.

La surface interne de la partie tubulaire 30, 230 comprend une surface interne arrière 36, 236 et une surface interne avant 38, 238 du corps principal 14, 214, alignées selon l'axe 12. La surface interne avant 38, 238 présente une forme anti-rotation, comme il sera précisé ci-après. Dans les modes de réalisation représentés, la surface interne arrière 36, 236 présente une forme cylindrique de révolution.

La paroi d'appui 32 est sensiblement perpendiculaire à l'axe 12 et comprend : une face avant 40 ; et une ouverture centrale 42, ménagée dans la paroi d'appui autour de l'axe 12.

Le corps de pince 16, 216 présente une forme tubulaire et s'étend selon l'axe 12. Le corps de pince comporte une portion avant 44 et une portion arrière 46, 246, axialement adjacentes et solidaires l'une de l'autre, préférentiellement formées d'une pièce.

Perpendiculairement à l'axe 12, la portion arrière 46, 246 présente une dimension externe maximale supérieure à une dimension externe maximale de la portion avant 44. De préférence, les portions avant 44 et arrière 46, 246 du corps de pince 16, 216 sont reliées par un épaulement 47 plan, perpendiculaire à l'axe 12.

Le corps de pince 16, 216 est en saillie axiale par rapport au corps principal 14, 214. Dans les modes de réalisation représentés, le corps de pince 16, 216 traverse l'ouverture centrale 42 de la paroi d'appui 32, de sorte que la portion avant 44 forme une saillie vers l'avant par rapport à ladite paroi d'appui 32. De préférence, l'épaulement 47 est en butée axiale contre une face arrière de la paroi d'appui 32.

La portion avant 44 du corps de pince 16, 216 comporte : une surface radiale 48 externe, de forme cylindrique de révolution ; et une pluralité d'ouvertures radiales 50, ménagées dans ladite surface radiale 48. Plus précisément, la portion avant 44 comporte une pluralité de languettes 52, formant partiellement la surface radiale 48, chaque languette 52 séparant deux ouvertures radiales 50 angulairement adjacentes. De préférence, les ouvertures radiales 50 sont réparties angulairement de manière régulière autour de l'axe 12.

Chaque ouverture radiale 50 s'étend axialement entre deux extrémités fermées, formées par un bord avant 54 et par un bord arrière 56. De préférence, les bords avant 54 des ouvertures radiales 50 sont plans, coplanaires et perpendiculaires à l'axe 12 ; et de même les bords arrière 56 des ouvertures radiales sont plans, coplanaires et perpendiculaires à l'axe 12.

Selon une première variante non représentée, chacun des bords avant et arrière est formé par un plan présentant un angle grave par rapport à l'axe 12. Selon une deuxième variante non représentée, chacun des bords avant et arrière est formé d'au moins deux plans, par exemple un plan perpendiculaire à l'axe 12 et un plan présentant un angle grave, par exemple sous la forme d'un chanfrein.

Dans les modes de réalisation représentés, la portion avant 44 comporte deux ouvertures radiales 50, symétriques l'une de l'autre par rapport à l'axe 12, et deux languettes 52, symétriques l'une de l'autre par rapport à l'axe 12. En variante non représentée, la portion avant comporte un nombre d'ouvertures radiales supérieur ou égal à trois, par exemple quatre ouvertures radiales, et un nombre identique de languettes.

De plus, dans les modes de réalisation représentés, chaque languette 52 comporte un méplat interne 58, parallèle à l'axe 12. Chaque méplat interne 58 forme un bord latéral des deux ouvertures radiales 50.

La portion arrière 46, 246 du corps de pince 16, 216 sera décrite ultérieurement. Comme il sera précisé ci-après, la portion arrière 46, 246 du corps de pince est mobile axialement par rapport au corps principal 14, 214 et bloquée en rotation dans ledit corps principal.

La pluralité d'éléments de pince 18 est disposée dans la portion avant 44 du corps de pince 16, 216. Plus précisément, chaque élément de pince 18 est situé en vis-à-vis, par rapport à l'axe 12, de l'une des ouvertures radiales 50 du corps de pince.

Chaque élément de pince 18 comporte une surface arrière 60, sensiblement plane, perpendiculaire à l'axe 12 et orientée vers la portion arrière 46, 246 du corps de pince 16, 216. De préférence, chaque élément de pince 18 comporte en outre une surface avant 62 sensiblement plane, parallèle et opposée à la surface arrière 60.

Chaque élément de pince 18 comporte en outre une surface radiale externe 64 et une surface radiale interne 66, délimitant radialement ledit élément de pince par rapport à l'axe 12. La surface radiale externe 64 comporte une portion de gorge 68, s'étendant perpendiculairement à l'axe 12, sensiblement à égale distance des surfaces arrière 60 et avant 62. De préférence, la portion de gorge 68 présente une forme en arc de cercle.

De préférence, la surface radiale externe 64 et la surface radiale interne 66 présentent respectivement des formes convexe et concave autour de l'axe 12. De préférence, la surface radiale externe 64 est incluse dans une surface enveloppe de forme cylindrique de révolution, d'un diamètre inférieur ou égal à celui de la surface radiale 48 de la portion avant 44 du corps de pince.

Par ailleurs, chaque élément de pince 18 est délimité angulairement, par rapport à l'axe 12, par deux flancs 70. Chaque flanc 70 s'étend selon un plan passant par l'axe 12.

Dans les modes de réalisation représentés, la fixation 10, 210 comporte deux éléments de pince 18 ; et les deux flancs 70 de chacun desdits éléments de pince 18 sont coplanaires.

Par ailleurs, dans les modes de réalisation représentés, chaque élément de pince 18 comprend deux méplats externes 72, parallèles l'un à l'autre et à l'axe 12. Chaque méplat externe 72 est en saillie radiale par rapport à la portion de gorge 68. Chaque méplat externe 72 est adjacent à l'un des flancs 70 et perpendiculaire audit flanc.

En variante non représentée, la fixation comporte un nombre d'éléments de pince 18 supérieur ou égal à trois, par exemple quatre éléments de pince, et un nombre identique d'ouvertures radiales 50.

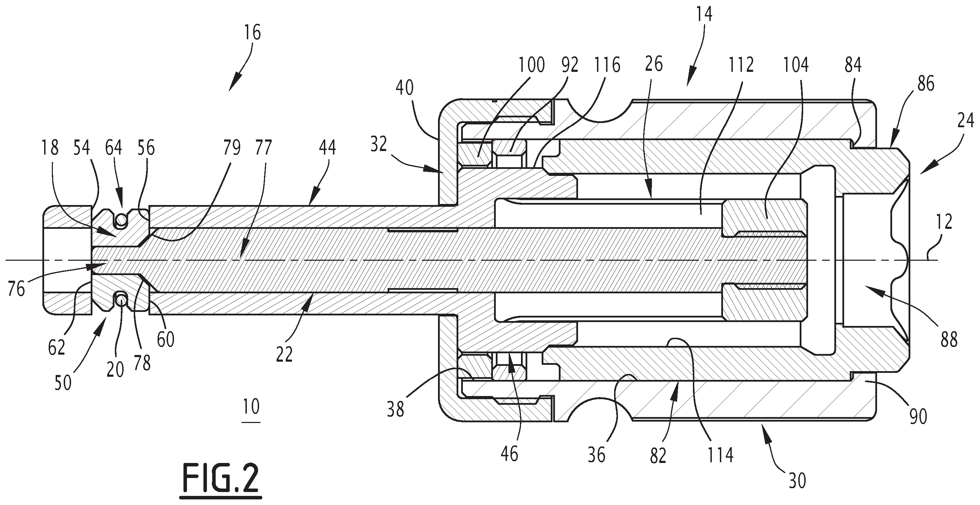

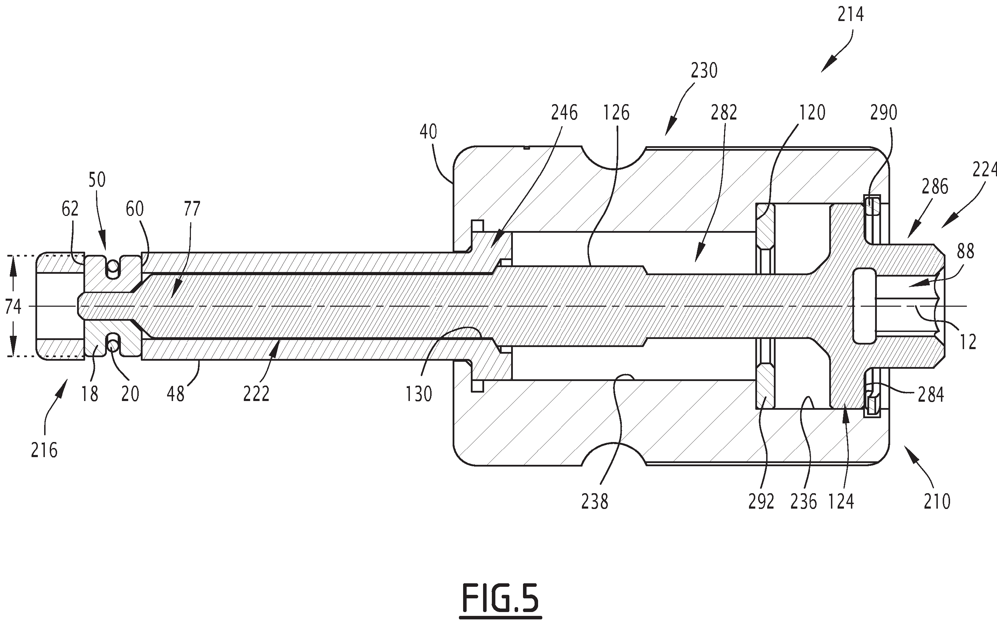

Comme il sera précisé ci-après, chaque élément de pince 18 est mobile par rapport au corps de pince 16, 216, entre une position rétractée et une position déployée. Les figures 2 et 5 représentent la position rétractée des éléments de pince 18. Les figures 3 et 6 représentent la position déployée des éléments de pince 18.

Dans la position rétractée, l'élément de pince 18 est entièrement contenu à l'intérieur de la surface radiale 48 de la portion avant 44 du corps de pince. Plus précisément, dans la position rétractée, l'élément de pince 18 est en retrait par rapport à l'ouverture radiale 50 en vis-à-vis de laquelle il est disposé.

De préférence, dans la position rétractée, les flancs 70 adjacents de deux éléments de pince 18 adjacents sont au contact l'un de l'autre et les portions de gorge 68 des éléments de pince forment une gorge continue. Dans les modes de réalisation représentés, dans la position rétractée, les deux éléments de pince 18 sont au contact l'un de l'autre par leurs flancs 70 coplanaires et les deux portions de gorge 68 forment une gorge continue.

Dans la position déployée, l'élément de pince 18 est disposé dans l'ouverture radiale 50 correspondante et la surface arrière 60 de l'élément de pince 18 est en saillie radiale par rapport à la surface radiale 48 de la portion avant 44 du corps de pince.

De préférence, dans la position déployée, les surfaces arrière 60 et avant 62 de l'élément de pince 18 sont en contact, respectivement, avec le bord arrière 56 et avec le bord avant 54 de l'ouverture radiale 50 correspondante.

Dans les modes de réalisation représentés, dans la position déployée, chacun des méplats externes 72 de l'élément de pince 18 est par ailleurs en contact avec le méplat interne 58 de l'une des deux languettes 52 délimitant l'ouverture radiale 50 correspondante.

L'organe élastique annulaire 20 s'étend sensiblement dans un plan perpendiculaire à l'axe 12 et est disposé autour des éléments de pince 18, en contact avec lesdits éléments de pince.

Sous l'effet d'une contrainte mécanique, l'organe élastique annulaire 20 est étirable de manière réversible entre une première 74 et une deuxième 75 dimensions transversales, la deuxième dimension transversale étant strictement supérieure à la première dimension transversale. Par « dimension transversale », on entend une dimension maximale de l'organe élastique annulaire 20, mesurée perpendiculairement à l'axe 12.

Dans la position rétractée des éléments de pince 18, l'organe élastique annulaire 20 présente la première dimension transversale 74, correspondant à une contrainte mécanique faible. Dans la position déployée des éléments de pince 18, l'organe élastique annulaire 20 présente la deuxième dimension transversale 75, correspondant à une contrainte mécanique plus élevée.

De préférence, comme dans les modes de réalisation représentés, l'organe élastique annulaire 20 présente une forme sensiblement torique et est disposé dans les portions de gorge 68 des éléments de pince 18. De préférence, l'organe élastique annulaire 20 est un ressort en acier ou un joint torique.

L'écarteur 22, 222 s'étend selon l'axe 12 dans le corps principal 14, 214 et dans le corps de pince 16, 216.

Comme il sera précisé ci-après, le corps de pince 16, 216 et l'écarteur 22, 222 sont mobiles axialement l'un par rapport à l'autre, entre une première et une deuxième positions axiales de l'écarteur 22, 222 par rapport au corps de pince 16, 216. Les figures 2 et 4 représentent la première position axiale de l'écarteur 22, 222 par rapport au corps de pince 16, 216.

Plus précisément, comme il sera précisé ci-après, la fixation 10, 210 est configurée de sorte que, lorsque l'écarteur 22, 222 est dans la première position axiale par rapport au corps de pince 16, 216, les éléments de pince 18 sont dans la position rétractée ; et lorsque l'écarteur 22, 222 est dans la deuxième position axiale par rapport au corps de pince 16, 216, les éléments de pince 18 entourent ledit écarteur 22, 222 et sont dans la position déployée.

Dans les modes de réalisation représentés, l'écarteur 22, 222 comporte une partie avant 76 et une partie arrière 77, alignées selon l'axe 12. Les parties avant 76 et arrière 77 présentent respectivement une première et une deuxième dimensions radiales, la première dimension radiale étant strictement inférieure à la deuxième dimension radiale.

La fixation 10, 210 est configurée de sorte que, dans la première position axiale de l'écarteur 22, 222 par rapport au corps de pince 16, 216, les éléments de pince 18 sont disposés autour de la partie avant 76 de l'écarteur 22, 222 ; et dans la deuxième position axiale de l'écarteur 22, 222 par rapport au corps de pince 16, 216, les éléments de pince 18 sont disposés autour de la partie arrière 77 de l'écarteur 22, 222.

Plus précisément, dans les modes de réalisation représentés, chacune des parties avant 76 et arrière 77 présente sensiblement une forme cylindrique de révolution, la partie arrière 77 présentant de préférence une forme complémentaire de la surface radiale interne 66 de chaque élément de pince 18. Préférentiellement, l'écarteur 22, 222 comprend en outre une jonction tronconique 78, reliant les parties avant 76 et arrière 77. Plus préférentiellement, chaque élément de pince 18 comprend une surface chanfreinée 79 sensiblement complémentaire de ladite jonction tronconique 78 ; et dans la première position axiale de l'écarteur 22, 222 par rapport au corps de pince 16, 216, ladite surface chanfreinée 79 de chaque élément de pince 18 est en vis-à-vis de la jonction tronconique 78 dudit écarteur 22, 222, comme visible sur les figures 2 et 4.

L'élément d'actionnement 24, 224 est disposé dans le corps principal 14, 214 et comporte une portion arrière 80, 280 et une portion avant 82, 282, alignées selon l'axe 12. La portion avant 82, 282 de l'élément d'actionnement 24, 224 sera décrite ultérieurement.

La portion arrière 80, 280 de l'élément d'actionnement 24, 224 comprend une butée arrière 84, 284 et un organe d'entraînement 86, 286. La butée arrière 84, 284 est sensiblement plane, perpendiculaire à l'axe 12 et orientée vers l'arrière. L'organe d'entraînement 86, 286 forme une saillie arrière par rapport à ladite butée arrière 84, 284. De préférence, l'organe d'entraînement 86, 286 forme également une saillie arrière par rapport à l'extrémité arrière ouverte du corps principal 14, 214.

L'élément d'actionnement 24, 224 est mobile en rotation autour de l'axe 12 par rapport au corps principal 14, 214. De préférence, l'organe d'entraînement 86, 286 comprend un moyen d'entraînement en rotation par rapport au corps principal. Dans les modes de réalisation représentés, ledit moyen d'entraînement comporte une empreinte axiale 88, formée par une paroi interne de l'organe d'entraînement 86, 286. En variante non représentée, le moyen d'entraînement est formé sur une paroi externe de l'organe d'entraînement.

Comme il sera précisé ci-après, la fixation 10, 210 est configurée de sorte que, sous l'effet d'une rotation de l'élément d'actionnement 24, 224 par rapport au corps principal 14, 214, le corps de pince 16, 216 et l'écarteur 22, 222 se déplacent l'un par rapport à l'autre, entre la première et la deuxième positions axiales de l'écarteur 22, 222 par rapport au corps de pince 16, 216.

Préférentiellement, l'élément d'actionnement 24, 224 est configuré pour se déplacer axialement par rapport au corps principal 14, 214 selon une course limitée, entre une position arrière et une position avant. Plus préférentiellement, dans la position arrière de l'élément d'actionnement, la butée arrière 84, 284 est au contact d'une contre-butée 90, 290 solidaire de l'extrémité arrière du corps principal 14, 214 ; et la fixation 10, 210 comprend en outre un joint de compression 92, 292, disposé dans le corps principal 14, 214, l'élément d'actionnement 24, 224 en position avant venant au contact dudit joint de compression 92, 292.

Comme il sera détaillé ci-après, la fixation 10, 210 est mobile entre une configuration rétractée et une configuration déployée. Dans la configuration rétractée de la fixation 10, 210, l'écarteur 22, 222 est dans la première position axiale par rapport au corps de pince 16, 216 ; chaque élément de pince 18 est dans la position rétractée ; et l'organe élastique annulaire 20 présente la première dimension transversale 74. Dans la configuration déployée de la fixation 10, 210, l'écarteur 22, 222 est dans la deuxième position axiale par rapport au corps de pince 16, 216 ; chaque élément de pince 18 est dans la position déployée ; et l'organe élastique annulaire 20 présente la deuxième dimension transversale. Les figures 2 et 5 montrent la configuration rétractée de la fixation 10, 210. Les figures 3 et 6 montrent la configuration déployée de la fixation 10, 210.

De préférence, dans la configuration rétractée de la fixation 10, 210, l'élément d'actionnement 24, 224 est en position arrière par rapport au corps principal 14, 214.

La fixation 10 des figures 1 à 3 va à présent être plus précisément décrite.

La partie tubulaire 30 du corps principal 14 de la fixation 10 comporte une paroi arrière 90, sensiblement perpendiculaire à l'axe 12. La paroi arrière 90 forme la contre-butée précédemment décrite, solidaire de l'extrémité arrière du corps principal 14. La paroi arrière 90 comporte un perçage central, disposé autour de l'axe 12.

La surface interne arrière 36 du corps principal 14, formée par la partie tubulaire 30, s'étend axialement de la paroi arrière 90 jusqu'à un bord avant 94. Ledit bord avant 94 forme une surface plane, perpendiculaire à l'axe 12 et orientée vers l'avant.

La partie tubulaire 30 comporte en outre au moins deux pattes 96 en saillie axiale par rapport au bord avant 94 de la surface interne arrière 36, lesdites pattes 96 formant la surface interne avant 38 du corps principal 14. Chaque patte 96 comprend un pan interne 98 plan et parallèle à l'axe 12. Les pans internes 98 constituent la forme anti-rotation de la surface interne avant 38.

Dans le mode de réalisation représenté, la partie tubulaire 30 comporte quatre pattes 96, chaque pan interne 98 étant perpendiculaire aux pans internes angulairement adjacents.

Dans le mode de réalisation des figures 1 à 3, la paroi d'appui 32 du corps principal 14 est formée par un embout 99, solidaire de la partie tubulaire 30. Ladite partie tubulaire 30 et l'embout 99 sont assemblés de manière amovible, par exemple à l'aide d'un système filetage/taraudage.

L'élément de maintien 26 de la fixation 10 est disposé dans le corps principal 14 et s'étend selon l'axe 12. L'élément de maintien 26 est fixe en translation et en rotation par rapport au corps principal.

Plus précisément, l'élément de maintien 26 comprend : une base 100 ; deux montants 102 ; et une pièce de jonction 104.

La base 100 comporte : une face avant 106 et une face arrière, sensiblement planes et perpendiculaires à l'axe 12 ; un orifice traversant 108, centré sur l'axe 12 ; et un bord externe 110. Le bord externe 110 comporte des pans externes, complémentaires des pans internes 98 formés par les pattes 96 de la partie tubulaire 30 du corps principal 14.

Les montants 102 s'étendent axialement à partir de la face arrière de la base 100, de part et d'autre de l'orifice traversant 108. Chaque montant 102 comprend une surface plane 112, parallèle à l'axe 12 et orientée vers ledit axe 12. La pièce de jonction 104 relie entre eux les montants 102, à l'opposé de la base 100.

Dans la fixation 10, la face arrière de la base 100 est au contact du bord avant 94 de la surface interne arrière 36 du corps principal 14 ; la face avant 106 de ladite base est au contact de l'embout 99 ; et le bord externe 110 de ladite base est au contact des pans internes 98 des pattes 96 de la partie tubulaire 30. La base 100 de l'élément de maintien 26 est ainsi maintenue fixe en translation et en rotation par rapport au corps principal 14.

Par ailleurs, dans la fixation 10 des figures 1 à 3, l'écarteur 22 est fixe par rapport au corps principal 14. De préférence, l'écarteur 22 est fixé à l'élément de maintien 26.

Plus précisément, dans le mode de réalisation représenté, l'écarteur 22 est fixé à la pièce de jonction 104 de l'élément de maintien 26 et s'étend axialement entre les montants 102 et à travers l'orifice traversant 108 de la base 100. De préférence, l'écarteur 22 est vissé à la pièce de jonction 104.

Dans la fixation 10 des figures 1 à 3, l'organe d'entraînement 86 de la portion arrière 80 de l'élément d'actionnement 24 est disposé dans le perçage de la paroi arrière 90 du corps principal 14.

La portion avant 82 dudit élément d'actionnement 24 est de forme tubulaire et comporte un taraudage 114. Ladite portion avant 82 est disposée autour des montants 102 de l'élément de maintien 26. De préférence, une surface externe de la portion avant 82 de l'élément d'actionnement 24 est cylindrique de révolution, sensiblement complémentaire de la surface interne arrière 36 du corps principal 14.

Par ailleurs, dans le mode de réalisation représenté, le joint de compression 92 est en forme de bague, disposée autour des montants 102 et au contact de la face arrière de la base 100 de l'élément de maintien 26. La portion avant 82 de l'élément d'actionnement 24 est apte à venir en butée axiale contre le joint de compression 92 dans la position avant dudit élément d'actionnement.

La portion arrière 46 du corps de pince 16 de la fixation 10 va à présent être décrite.

Une surface radiale de ladite portion arrière 46 comporte : deux zones filetées 116, disposées en vis-à-vis par rapport à l'axe 12 ; et deux méplats 118, parallèles à l'axe 12 et disposés en vis-à-vis par rapport audit axe 12.

Les zones filetées 116 sont aptes à coopérer avec le taraudage 114 de la portion avant 82 de l'élément d'actionnement 24. Chaque méplat 118 est apte à coulisser axialement contre la surface plane 112 d'un montant 102 de l'élément de maintien 26, au cours d'une rotation de l'élément d'actionnement 24 par rapport au corps principal 14. Ainsi, la portion arrière 46 du corps de pince 16 est mobile axialement par rapport au corps principal 14 et bloquée en rotation dans ledit corps principal.

La fixation 210 des figures 4 à 6 va à présent être plus précisément décrite.

Le corps principal 214 de la fixation 210 est représenté en coupe sur la figure 3. La partie tubulaire 230 du corps principal 214 comporte une gorge interne, ménagée dans la surface interne arrière 236. La fixation 210 comporte en outre un jonc 290 logé dans ladite gorge interne. Le jonc 290 forme la contre-butée précédemment décrite, solidaire de l'extrémité arrière du corps principal 214.

La surface interne arrière 236, cylindrique de révolution, s'étend axialement entre la gorge interne recevant le jonc 290 et un épaulement 120, orienté vers l'arrière.

La surface interne avant 238 du corps principal 214, formée par la partie tubulaire 230, s'étend vers l'avant depuis l'épaulement 120 et présente une forme anti-rotation. Dans le mode de réalisation représenté, la surface interne avant 238 est formée de pans 122 parallèles à l'axe 12 et présente une section hexagonale.

Dans le mode de réalisation des figures 4 à 6, la paroi d'appui 32 du corps principal 214 est fixe par rapport à la partie tubulaire 230. Par exemple, la partie tubulaire 230 et la paroi d'appui 32 sont assemblées par sertissage.

Par ailleurs, l'écarteur 222 de la fixation 210 est solidaire de l'élément d'actionnement 224. Dans le mode de réalisation représenté, l'écarteur 222 est formé d'une pièce avec l'élément d'actionnement 224.

Plus précisément, la partie arrière 280 de l'élément d'actionnement 224 comporte une couronne 124, formant la butée arrière 284. La couronne 124 comprend un bord externe de forme sensiblement complémentaire de la surface interne arrière 236 du corps principal 214. La portion avant 282 de l'élément d'actionnement 224 a sensiblement une forme de fût et s'étend axialement entre la couronne 124 et la partie arrière 77 de l'écarteur 222. Ladite portion avant 282 comporte un filetage 126.

Par ailleurs, dans le mode de réalisation représenté, le joint de compression 292 est formé par une rondelle au contact de l'épaulement 120 du corps principal 214. La couronne 124 est apte à venir au contact dudit joint de compression 292 dans la position avant de l'élément d'actionnement 224.

La portion arrière 246 du corps de pince 216 va à présent être décrite.

Une surface radiale externe 128 de ladite portion arrière 246 présente une forme anti-rotation, complémentaire de la forme anti-rotation de la surface interne avant 238 du corps principal 214. Dans le mode de réalisation représenté, la surface radiale externe 128 du corps de pince 216 présente une forme à six pans. La surface radiale externe 128 est apte à coulisser axialement contre les pans 122 de la surface interne avant 238.

Par ailleurs, une surface radiale interne de ladite portion arrière 246 comporte un taraudage 130, apte à coopérer avec le filetage 126 de la portion avant 282 de l'élément d'actionnement 224.

Ainsi, la portion arrière 246 du corps de pince 216 est mobile axialement par rapport au corps principal 214 et bloquée en rotation dans ledit corps principal.

Un procédé d'installation de la fixation 10, 210 dans des structures 300, représentées sur les figures 3 et 6, va à présent être décrit. Les structures 300 comprennent une première 302 et une seconde 304 faces sensiblement parallèles et opposées. Un perçage 306 ménagé dans les structures 300 débouche sur chacune des première 302 et seconde 304 faces.

Au début du procédé d'installation, la fixation 10, 210 est dans la configuration rétractée décrite ci-dessus.

La fixation 10, 210 est assemblée à un outil de pose (non représenté), manuel ou robotique. Le robot ou l'opérateur insère le corps de pince 16, 216 dans le perçage 306 des structures 300, jusqu'à ce que la face avant 40 de la paroi d'appui 32 du corps principal 14, 214 vienne au contact de la première face 302.

Ensuite, le corps principal 14, 214 est maintenu fixe en rotation par rapport aux structures 300 par l'outil de pose, notamment au moyen des dents 34 formées sur la surface externe dudit corps principal. En parallèle, l'élément d'actionnement 24, 224 est entraîné en rotation autour de l'axe 12 par rapport au corps principal, notamment au moyen de l'empreinte axiale 88 à laquelle s'accouple l'outil de pose.

Dans le mode de réalisation des figures 4 à 6, l'écarteur 222 est entraîné en rotation par la rotation de l'élément d'actionnement 224.

Sous l'effet de la rotation de l'élément d'actionnement, la portion arrière 46, 246 du corps de pince 16, 216 est entraînée axialement vers l'arrière par rapport au corps principal 14, 214. Le déplacement de ladite portion arrière 46, 246 est guidé. Dans le mode de réalisation des figures 1 à 3, le guidage est réalisé par le coulissement des méplats 118 de la portion arrière 46 contre les surfaces planes 112 des montants 102 de l'élément de maintien 26. Dans le mode de réalisation des figures 4 à 6, le guidage est réalisé par le coulissement de la surface radiale externe 128 de la portion arrière 246 contre les pans 122 de la surface interne avant 238 du corps principal 214.

Sous l'effet du déplacement axial du corps de pince 16, 216, les éléments de pince 18 coulissent vers l'arrière contre la jonction tronconique 78. En conséquence, les éléments de pince 18 s'écartent radialement les uns des autres et l'organe élastique annulaire 20 s'étire. En outre, chaque élément de pince 18 se déplace vers l'extérieur de l'ouverture radiale 50 correspondante.

Durant le déplacement de l'élément de pince 18 dans l'ouverture radiale 50, les surfaces arrière 60 et avant 62 de l'élément de pince 18 coulissent respectivement contre le bord arrière 56 et contre le bord avant 54 de l'ouverture radiale 50. Par ailleurs, dans les modes de réalisation représentés, chacun des méplats externes 72 de l'élément de pince 18 coulisse contre le méplat interne 58 de l'une des deux languettes 52 délimitant l'ouverture radiale 50.

Puis, les éléments de pince 18 atteignent la partie arrière 77 de l'écarteur 22, 222 et se retrouvent en position déployée. La surface arrière 60 de chaque élément de pince 18 est alors en saillie radiale par rapport à la surface radiale 48 du corps de pince, et l'organe élastique annulaire 20 présente la deuxième dimension transversale.

Le déplacement axial du corps de pince 16, 216 par rapport au corps principal 14, 214 se poursuit. Les surfaces radiales internes 66 des éléments de pince 18 coulissent contre la partie arrière 77 de l'écarteur 22, 222, jusqu'à ce que les surfaces arrière 60 desdits éléments de pince viennent au contact de la seconde face 304 des structures 300.

La rotation de l'élément d'actionnement 24, 224 est poursuivie jusqu'à l'application d'un effort de compression axiale sur les structures 300. L'élément d'actionnement 24, 224 s'écarte alors axialement de la contre-butée 90, 290 et se déplace vers le joint de compression 92, 292. Un couple de serrage s'exerce entre les zones filetées 116 du corps de pince 16 et le taraudage 114 de l'élément d'actionnement 24, ou entre le filetage 126 de l'élément d'actionnement 224 et le taraudage 130 du corps de pince 216, se traduisant par un effort axial exercé par la fixation 10, 210 sur les structures 300.

L'assemblage 500 de la figure 3 et l'assemblage 600 de la figure 6 sont ainsi obtenus. La paroi d'appui 32 du corps principal 14, 214 et la surface arrière 60 des éléments de pince 18 de la fixation 10, 210 sont en appui, respectivement, contre la première face 302 et contre la seconde face 304 des structures 300.

Le démontage de l'assemblage 500, 600 est effectué en faisant tourner l'élément d'actionnement dans l'autre sens, pour remettre la fixation 10, 210 dans la configuration rétractée. Les éléments de pince 18 se déplacent alors axialement le long de la jonction tronconique 78 de l'écarteur 22, 222, jusqu'à la portion avant 76 dudit écarteur. Durant ce déplacement, l'organe élastique annulaire 20 se détend et sa dimension transversale diminue. Les éléments de pince 18 sont alors ramenés à l'intérieur de la portion avant 44 du corps de pince 16, 216.

La fixation 10, 210 peut ainsi être dissociée des structures 300 et réutilisée.

## Revendications

1. Fixation (10, 210) pour l'assemblage temporaire d'au moins deux structures (300) préalablement percées, ladite fixation comprenant :
- un corps principal (14, 214) tubulaire, s'étendant selon un axe (12) entre une extrémité avant (40) et une extrémité arrière ;
- un corps de pince (16, 216) tubulaire, mobile axialement par rapport au corps principal et comprenant une portion avant (44) et une portion arrière (46, 246), alignées selon l'axe (12) ; la portion arrière (46, 246) étant bloquée en rotation dans le corps principal (14, 214) ; la portion avant (44) formant une saillie par rapport à l'extrémité avant (40) du corps principal et comprenant : une surface radiale (48), sensiblement cylindrique de révolution ; et une pluralité d'ouvertures radiales (50), disposées autour de l'axe (12) ;
- un écarteur (22, 222), s'étendant selon l'axe (12) dans le corps principal et dans le corps de pince ; et
- un élément d'actionnement (24, 224), disposé à l'extrémité arrière du corps principal (14, 214) et mobile en rotation par rapport audit corps principal ;
la fixation étant configurée de sorte que, sous l'effet d'une rotation de l'élément d'actionnement par rapport au corps principal, le corps de pince (16, 216) et l'écarteur (22, 222) sont mobiles l'un par rapport à l'autre, entre une première et une deuxième positions axiales de l'écarteur par rapport au corps de pince ;
la fixation étant **caractérisée en ce que** :
- elle comprend en outre une pluralité d'éléments de pince (18) et un organe élastique annulaire (20), disposés dans la portion avant (44) du corps de pince, l'organe élastique annulaire entourant les éléments de pince ; chaque élément de pince (18) étant en vis-à-vis de l'une de la pluralité d'ouvertures radiales (50) du corps de pince ; chaque élément de pince comprenant une surface d'appui (60), sensiblement perpendiculaire à l'axe (12) et orientée vers la portion arrière (46, 246) du corps de pince ;
- chaque élément de pince (18) est mobile par rapport au corps de pince (16, 216), entre une position rétractée, dans laquelle l'élément de pince est entièrement contenu à l'intérieur de la surface radiale (48) de la portion avant (44), et une position déployée, dans laquelle l'élément de pince est disposé dans l'ouverture radiale (50) correspondante et la surface d'appui (60) de l'élément de pince est en saillie radiale par rapport à la surface radiale (48) de la portion avant ;
- sous l'effet d'une contrainte mécanique, l'organe élastique annulaire (20) est étirable de manière réversible entre une première (74) et une deuxième (75) dimensions transversales ; et
- la fixation est mobile entre : une configuration rétractée, dans laquelle l'écarteur (22, 222) est dans la première position axiale par rapport au corps de pince (16, 216), chaque élément de pince (18) est dans la position rétractée et l'organe élastique annulaire (20) présente la première dimension transversale (74) ; et une configuration déployée, dans laquelle l'écarteur est dans la deuxième position axiale par rapport au corps de pince, les éléments de pince (18) entourent l'écarteur (22, 222), chaque élément de pince est dans la position déployée et l'organe élastique annulaire (20) présente la deuxième dimension transversale.

2. Fixation selon la revendication 1, dans laquelle : l'écarteur (22, 222) comporte une première (76) et une deuxième (77) parties, alignées selon l'axe (12) et présentant respectivement une première et une deuxième dimensions radiales, la première dimension radiale étant inférieure à la deuxième dimension radiale ; la fixation étant configurée de sorte que, dans la configuration rétractée et dans la configuration déployée de la fixation, les éléments de pince (18) sont disposés respectivement autour de la première partie (76) et autour de la deuxième partie (77) de l'écarteur.

3. Fixation selon la revendication 1 ou 2, dans laquelle : chaque élément de pince (18) comprend une surface radiale externe (64) comportant une portion de gorge (68), sensiblement perpendiculaire à l'axe (12) ; et l'organe élastique annulaire (20) est disposé dans la portion de gorge (18) de chacun des éléments de pince.

4. Fixation selon l'une des revendications précédentes, dans laquelle : chaque élément de pince (18) est délimité angulairement par deux flancs (70) ; et dans la configuration rétractée, les flancs (70) adjacents de deux éléments de pince (18) adjacents sont au contact l'un de l'autre.

5. Fixation selon l'une des revendications précédentes, comprenant deux éléments de pince (18), dans laquelle : le corps de pince (16, 216) comprend deux ouvertures radiales (50) et deux languettes (52) séparant lesdites ouvertures radiales ; chaque languette comprend un méplat interne (58), parallèle à l'axe (12) ; chaque élément de pince (18) comprend deux méplats externes (72), parallèles l'un à l'autre et à l'axe (12) ; et dans la configuration déployée de la fixation, chacun des méplats externes (72) de chaque élément de pince (18) est au contact du méplat interne (58) de l'une des deux languettes (52).

6. Fixation (10) selon l'une des revendications précédentes, dans laquelle : l'écarteur (22) est fixe axialement par rapport au corps principal (14) ; l'élément d'actionnement (24) comporte une surface interne taraudée (114) ; et la portion arrière (46) du corps de pince (16) comporte un filetage (116), apte à coopérer avec ladite surface interne taraudée, de sorte que la rotation de l'élément d'actionnement (24) par rapport au corps principal (14) conduise à un déplacement axial du corps de pince (16) par rapport audit corps principal.

7. Fixation (10) selon la revendication 6, comprenant en outre un élément de maintien (26) disposé dans le corps principal (14) et fixe par rapport audit corps principal, l'écarteur (22) étant solidaire dudit élément de maintien.

8. Fixation (10) selon la revendication 7, dans laquelle la portion arrière (46) du corps de pince et l'élément de maintien (26) comprennent respectivement des premières (118) et des deuxièmes (112) surfaces planes, parallèles à l'axe (12) ; lesdites premières et deuxièmes surfaces planes étant aptes à coulisser les unes contre les autres lors d'un déplacement axial du corps de pince (16) par rapport au corps principal (14).

9. Fixation (210) selon l'une des revendications 1 à 5, dans laquelle : l'écarteur (222) est solidaire de l'élément d'actionnement (224) ; l'élément d'actionnement comporte une surface externe filetée (126) ; et la portion arrière (246) du corps de pince (216) comporte un taraudage (130), apte à coopérer avec ladite surface externe filetée, de sorte que la rotation de l'élément d'actionnement (224) par rapport au corps principal (214) conduise à un déplacement axial du corps de pince (216) par rapport audit corps principal.

10. Fixation (210) selon la revendication 9, dans laquelle la portion arrière (246) du corps de pince et une surface interne (238) du corps principal (214) comprennent respectivement des troisièmes (128) et des quatrièmes (122) surfaces planes, parallèles à l'axe (12) ; lesdites troisièmes et quatrièmes surfaces planes étant aptes à coulisser les unes contre les autres lors d'un déplacement axial du corps de pince (216) par rapport au corps principal (214).

11. Fixation (10, 210) selon l'une des revendications précédentes, dans laquelle le corps principal (14, 214) comprend une paroi d'appui (32), destinée à venir en appui contre une première face (302) des structures (300).

12. Assemblage (500, 600) comprenant : des structures (300) à assembler, comprenant une première (302) et une seconde (304) faces opposées, ainsi qu'un perçage (306) débouchant sur chacune desdites première et seconde faces ; et une fixation (10, 210) selon la revendication 11, en configuration déployée, la portion avant (44) du corps de pince étant disposée dans le perçage (306), la paroi d'appui (32) du corps principal et la surface d'appui (60) des éléments de pince étant en appui, respectivement, contre la première face (302) et contre la seconde face (304) des structures.
